(19) Europäisches Patentamt / European Patent Office / Office européen des brevets

(11) **EP 3 585 607 B1**

(12) **EUROPEAN PATENT SPECIFICATION**

(45) Date of publication and mention
of the grant of the patent:
**15.12.2021 Bulletin 2021/50**

(21) Application number: **18708528.7**

(22) Date of filing: **19.02.2018**

(51) Int Cl.:
**B32B 5/26** *(2006.01)*    **B29C 70/08** *(2006.01)*

(86) International application number:
**PCT/US2018/018597**

(87) International publication number:
**WO 2018/156449 (30.08.2018 Gazette 2018/35)**

(54) **FIBER COMPOSITE WITH REDUCED SURFACE ROUGHNESS AND METHOD FOR ITS MANUFACTURE**

FASERVERBUNDSTOFF MIT VERRINGERTER OBERFLÄCHENRAUHEIT UND VERFAHREN ZUR HERSTELLUNG DAVON

COMPOSITE DE FIBRES À RUGOSITÉ DE SURFACE RÉDUITE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2017 US 201762463707 P**

(43) Date of publication of application:
**01.01.2020 Bulletin 2020/01**

(73) Proprietor: **Dow Global Technologies, LLC Midland, MI 48674 (US)**

(72) Inventors:
• **CAI, Jun**
**Midland, MI 48642 (US)**
• **KOENIGER, Rainer**
**CH-8807 Freienbach (CH)**
• **BANK, David, H.**
**Midland, MI 48667 (US)**

(74) Representative: **Beck Greener LLP Fulwood House 12 Fulwood Place London WC1V 6HR (GB)**

(56) References cited:
**EP-A1- 3 050 916      DE-A1-102012 018 801
US-A1- 2010 098 931      US-A1- 2013 034 447
US-A1- 2016 059 517**

**Description**

This invention relates to methods of making epoxy resin composites having reduced surface roughness and methods for making those composites.

Fiber composites are sometimes used to make exterior vehicle body parts or other products that require near surface planarity and smoothness. These composites offer significant advantages in reduced weight compared to metals and in the ability to make complexly shaped parts.

One area in which the fiber composites often fall short is in their surface smoothness. Metals easily form body panels having highly smooth surfaces that when coated easily produce a glossy appearance.

Fiber reinforced composites have much rougher surfaces, due to the presence of distinct fiber and binder resin phases. Fiber rich areas at the surface tend to be elevated slightly above the surrounding binder rich phase, in part due to shrinkage in the resin phase during the manufacturing process. The binder resin phase has a larger coefficient of thermal expansion than the fibers, so when the composite is cooled from the high manufacturing temperatures, the binder phase shrinks away from the surface. In addition, thermosetting binders exhibit some volume reduction as they cure, which also contributes to the surface roughness. These effects contribute to the surface roughness. The pattern of the fibers is clearly visible in the fiber composite, a phenomenon known as "print-through".

Several approaches have been suggested to overcome this problem. Almost all of these in one way or another provide a show surface overtop of the composite to hide the rough surface. For example, one can simply apply a thick layer of a gel coat, primer or paint onto the surface of the composite. US 2004-0033347 describes such an approach. An encapsulating polymeric coating can be applied using methods as described, for example, in GB Patent No. 2,408,005A. Similarly, WO 2008/104822 and US 2013-0273295 describe methods of applying a surface finish film to the composite to reduce surface roughness. In WO 2009/147633, a metal surface layer is applied to the same effect.

WO 2008-007094 describes a process in which a show surface having a very high fiber density is applied to a fiber composite. In the process described in US 2005-0095415, separate layers of a thermoplastic material are laminated onto the surface of a composite to produce the smooth surface.

All of the foregoing processes are undesirable because they add significant expense and processing complexity. The added layers can increase part thickness and weight.

US Patent No. 8,486,321 describes applying a covering layer made up of carbon nanotubes onto the surface of a woven fiber composite to reduce print-through. That process requires the separate fabrication of the carbon nanotube covering layer via a complex process that requires specific orientation of the nanotubes. This adds considerable expense and complexity to the manufacturing process.

Palardy et al., in Optimization of RTM processing parameters for Class A surface finish", Composites, Part B: Engineering (2008), 39B (7-8), 1280-1286, describe low profile additives mixed in with the resin in a resin transfer molding process to improve surface smoothness in the resulting fiber composite. For example, improved surface smoothness is obtained by adding 20 to 40% by weight of calcium carbonate particles into the resin. The calcium carbonate reduces resin shrinkage. However, large amounts of mineral fillers cause large increases in resin viscosity, which complicates resin handling and makes it difficult for the resin to penetrate fully and uniformly through the fibers. The presence of these high levels of fillers can also cause large changes in mechanical and other properties in the resin phase. Further, calcium carbonate exhibits a high specific gravity and as such its use in the manner described by Palardy *et al.* adds a great deal of mass to the resultant composite.

In our PCT/US2016/067611, published as WO2017120025A1, we described a method of improving surface smoothness of fiber composites by introducing fine particles into the resin phases. A portion of these particles become filtered out of the resin phase as it permeates into the fiber mass during composite manufacturing, forming a smooth surface layer.

US2013034447A1 discloses a wind turbine blade including an outer surface that serves as an aerodynamic surface when the blade is subjected for an air stream, and further discloses a resin matrix made of a laminate of at least one ply that includes the outer surface. The outer ply includes a nano structure embedded therein such that the filaments of the nano structure in the ply have essentially the same angular orientation relative a plane of the outer surface.

This invention is a process for making a fiber reinforced composite as defined in claim 1, comprising

  a) forming an impregnated multilayer fiber preform comprising

    i) a fiber mat that includes a mass of fibers that have individual fiber diameters of at least 250 nm,
    ii) a nanofiber sheet applied to the fiber mat, wherein the nanofiber sheet: A) is composed of monofilaments having a diameter of at most 100 nanometers, an aspect ratio of at least 3 and being made of a material that does not melt or degrade under the conditions of step b); B) has a thickness of at most 1 mm and C) has a porosity of at least 30%; wherein the impregnated nanofiber sheet is coextensive with a major surface of the impregnated preform, and the monofilaments of the nanofiber sheet are oriented substantially parallel to said

major surface; and

ii) a resin composition that includes a liquid phase which impregnates the fiber mat and nanofiber sheet such that the impregnated multilayer preform has a porosity of at most 2 volume-%; and

b) solidifying the liquid phase of the resin composition by cooling, curing or both cooling and curing the resin composition to form the fiber reinforced composite in which the impregnated nanofiber sheet is coextensive with a major surface of the fiber reinforced composite with the monofilaments of the nanofiber sheet being oriented substantially parallel to said major surface.

The invention is also a fiber reinforced composite as defined in claim 13.

Applicants have found that the presence of the nanofiber sheet causes a large decrease in surface roughness. This leads to improvements in the visual appearance of the composite by reducing print-through and increasing gloss. This eliminates the need to apply separate surface layers or very thick primer or coating layers to mask the composite surface. Because a smooth-surfaced composition is formed directly, separate manufacturing steps to produce surface smoothness are not needed.

Figure 1 is a perspective view, partially in section, of an embodiment of a multilayer preform useful for preparing a fiber-reinforced composite of the invention.

Figure 2 is an enlarged view of a fiber roving.

Figure 3 is a front section view of an embodiment of a process for making the fiber reinforced composite of the invention.

Figure 4 is a front sectional view of an alternative embodiment of the process of the invention.

Figure 5 is a micrograph showing the three-dimensional surface profile of Comparative Sample A.

Figure 6 is a micrograph showing the three-dimensional surface profile of Example 1.

The mass of fibers consists of fibers that have diameters of at least 250 nm. The fiber diameter may be as large as 50 $\mu$m. A preferred fiber diameter is 500 nm to 25 $\mu$m and a more preferred fiber diameter is 1 $\mu$m to 20 $\mu$m. The fiber lengths are greater than the fiber diameter. For purposes of this disclosure, the fiber diameter is the diameter of a circle having the same area as the cross-sectional area of the fiber. The fibers may be provided in the form of multifilament yarns, rovings or tows; in such cases, the fiber diameter refers to the diameter of the individual filaments in such yarns, rovings or tows, and not to the diameter of the yarns, rovings or tows themselves. Multifilament yarns, rovings and tows may have diameters as great as 1 mm.

The fibers may be made of any material or materials that are thermally and chemically stable under the conditions of preparing and using the fiber-reinforced composite. Examples of useful fibers include carbon fibers, glass and/or other ceramic fibers, mineral fibers such as mineral wool, organic polymer fibers, metal fibers, natural fibers such as wool, cotton, silk, jute and the like, or other fibrous material. Mixtures of fiber types can be used. Specific examples include carbon fibers that contain 60% or more carbon by weight, polyamide fibers, polyester fibers, aramid fibers, basalt fibers, wollastonite fibers, and aluminum silicate fibers.

Especially preferred fibers are provided in the form of multifilament rovings (sometimes referred to as "tows") having 3000 to 30,000 filaments per roving. Individual rovings may have diameters of, for example, at least 1 $\mu$m, at least 10 $\mu$m, at least 25 $\mu$m, at least 50 $\mu$m, at least 100 $\mu$m, at least 250 $\mu$m or at least 500 $\mu$m, and up to, for example, 10 mm, up to 5 mm, up to 2.5 mm or up to 1 mm. These multifilament fibers are most preferably carbon fibers. Examples of such carbon fibers are Aksaca 3K A-38, 6K A-38, 12K A-42, 24K A-42, 12K A-49 and 24K A-49 carbon fibers from DowAksa Ileri Kompozit Malzemeler Sanayi Ltd, Sti, Itanbul, Turkey. These product designations indicate the approximate number of filaments/roving in thousands (3K being 3000 filaments, for example) and the approximate tensile strength of the fiber in hundreds of MPa (A-38 indicating a tensile strength of 3800 MPa). Other suitable carbon fibers include 12K and 24K rovings available from Dost Kimya End Hamm Sen Ve Tic Ltd. Sti, Istanbul, Turkey. The carbon content of these fibers may be 80% or more by weight.

The fibers or yarns, rovings or tows made up of such fibers may be formed into a mat by entangling, weaving, knitting, braiding, stitching, needle-punching or otherwise. The fibers may be aligned in one or more specific directions, or may be randomly oriented. The fibers may be continuous (having lengths, for example, equal to the expanse of the composite in the direction in which the particular fibers are aligned). Alternatively, the fibers may be short fibers having lengths, for example, of at least 1 mm and up to 300 mm, preferably 3 to 150 mm. Such short fibers may be randomly oriented in the fiber mass.

In some embodiments, the fibers mat is made of up multiple layers of aligned fibers or rovings. The fibers or rovings in each layer may be woven, knitted or braided, or simply aligned. The multiple layers may be stitched together if desired. Aligned fibers or rovings in the various layers may be oriented in two or more different directions to provide highly isotropic properties or more anisotropic properties, as may be wanted in any particular application. The various layers may be stitched or otherwise held together.

An individual layer of the fiber mat may have an area density of, for example, 100 to 2000 g/m², 200 to 1000 g/m² or 300 to 750 g/m².

A preferred fiber mat is a woven fiber mat having an area density of 300 to 1000 g/m², especially 500 to 750 g/m², in which the fibers on at least one surface are provided in the form of multifilament rovings having 3000 to 30,000 filaments, especially 12,000 to 24,000 filaments, per roving. Such a preferred fiber mat may include multiple layers of aligned fibers or rovings. The individual layers may all be aligned in the same direction, or may be aligned in two or more different directions. The rovings are most preferably carbon fiber rovings.

The fiber mat may have a porosity of at least 30 volume-% up to about 85 volume-%. Porosity is defined for purposes of this invention as:

$$Porosity = 100\% \left(1 - \frac{Fiber\ mat\ volume\ density}{Fiber\ material\ bulk\ density}\right)$$

where the fiber material density is the density of the material from which the fibers are made.

The nanofiber sheet is composed of monofilaments having a diameter of at most 100 nanometers. The monofilaments may have diameters of at least 0.4 nm, at least 3 nm, at least 5 nm or at least 10 nm, up to 100 nm, up to 75 nm, up to 50 nm or up to 25 nm.

The monofilaments have an aspect ratio of at least 3. The aspect ratio may be at least 30, and may be, for example, up to 10,000,000, up to 1,000,000, up to 500, up to 250 or up to 100. Aspect ratio is the ratio of longest dimension to diameter. The diameter of the monofilaments is for purposes of this invention the diameter of a circle having the same cross-sectional area as the monofilaments.

The monofilaments may be continuous (having lengths, for example, equal to the expanse of the composite in the direction in which the particular fibers are aligned). Alternatively, the monofilaments may have lengths, for example, of up to 100 mm, provided the fibers have an aspect ratio as described above.

The monofilaments may be solid or tubular. They may have a circular or other cross-section.

The monofilaments are made of a material that does not melt or degrade under the conditions of solidifying the liquid phase of the resin composition. Materials as describe above with regard to the fiber mat are suitable. A preferred material is a carbon nanofiber or carbon nanotubes.

The nanofiber sheet may have a porosity of at least 30 volume-% up to 85 volume-%.

The monofilaments may be formed into a sheet by entangling, weaving, knitting, braiding, stitching, needle-punching, bonding (such as melt-bonding, welding or adhesive-bonding) or otherwise. The monofilaments are aligned substantially parallel to the plane defined by the opposing major surfaces of the nanofiber sheet. Some bending of the monofilaments out of this plane, such as at points where individual monofilaments cross, is permissible. In general, at least 90% by weight of the monofilaments are aligned within ±20 degrees of the plane of the nanofiber sheet. Within the plane of the sheet, the monofilaments may be aligned in one or more specific directions, or may be randomly oriented.

The nanofiber sheet may be made of up multiple layers of monofilaments. The monofilaments in each layer may be woven, knitted, bonded or braided, or simply aligned. Aligned monofilaments in the various layers may be oriented in two or more different directions to provide highly isotropic properties or more anisotropic properties, as may be wanted in any particular application. The various layers may be stitched or otherwise held together.

The nanofiber sheet has a thickness of at most 1 mm. Preferably, its thickness is no more than 100 μm. The nanofiber sheet thickness may be at least 100 nm. Thicknesses less than 100 μm are especially preferred, because those very thin sheets are adequate to provide improved surface characteristics without forming a significant surface layer that has different properties than the rest of the composite.

The nanofiber sheet may have an area density of, for example, 1 to 50 g/m².

At the temperature of the impregnation step, the resin composition contains a liquid phase, i.e., one or more components that are liquid at the temperature at which the resin composition is applied to the multilayer preform. The liquid phase includes one or more resin components that are capable of solidifying by cooling and/or curing (by themselves or in conjunction with one or more other ingredients of the resin composition) to form a solid resin phase. The liquid phase of the resin composition may, therefore, include one or more molten (i.e., heat-softened and/or melted) thermoplastic resins, and/or one or more liquid polymer precursors that engage in one or more curing reactions to form the resin phase of the composite. In some cases, the liquid phase of the resin composition may contain components that solidify via both cooling and curing mechanisms, whereby, for example, initial solidification is obtained through cooling, followed by curing to form a high molecular weight polymer.

The resin component(s) of the liquid phase are in some embodiments one or more thermoplastic polymers that are room temperature solids. Amorphous thermoplastic polymers suitably have a Vicat B50 (ASTM D 1525) softening temperature of at least 60°C. If the thermoplastic is a semi-crystalline material which exhibits a crystalline melting temperature, the crystalline melting temperature may be at least 120°C.

Examples of useful thermoplastic polymers include engineering thermoplastics such as acrylonitrile-butadiene-styrene (ABS) resins; polyamides (nylons) such as nylon-6 and nylon-6,6; polyesters such as polyethylene terephthalate and polybutylene terephthalate; polycarbonates, polyetherketones (PEK), polyetheretherketones (PEEK), polyimides, polyoxymethylene plastics including polyacetals; polyphenylene sulfide, polyphenylene oxide, polysulphones, polytetrafluoroethylene and ultra-high molecular weight polyethylene.

In other embodiments, the liquid phase of the resin composition includes one or more resin components that are liquid (at the temperature of impregnation) and cure to form a polymer that is a room temperature solid. These resin components may be roomtemperature liquids. Among this type of resin components are epoxy resin systems that include one or more polyepoxides that are liquid at the application temperature. In such cases, the resin composition will include at least one epoxy curing agent and may include one or more catalysts for the curing reaction, and other, optional components. The epoxy curing agent(s) and catalyst(s) may form part of the liquid phase or may be present in the form of solids at the application temperature, as described more fully below.

Alternatively, the liquid phase may include one or more precursors to polyurethane and/or polyurea polymers. Such precursors include one or more polyisocyanate compounds and one or more curatives that contain multiple isocyanate-reactive groups such as hydroxyl, primary amino and/or secondary amino groups, in each case being liquids at the application temperature. In such cases, the resin composition (but not necessarily the liquid phase) may include one or more catalysts for the reaction between the isocyanate groups and the isocyanate-reactive groups of the curative(s), and may contain other, optional components.

Other useful types of resin components include phenol-formaldehyde resin precursors, melamine resin precursors; polyimide precursors; diallyl phthalate resins and the like, which are liquid at the application temperature.

In some embodiments, the resin composition is 100% liquid at the temperature of impregnation. If solid materials are present, the resin composition preferably contains no more than 5 volume percent thereof. Smaller amounts of solids, such as up to 3 volume-%, are more preferred.

If solids are present in the resin composition, they preferably are i) materials that (via some mechanism such as reaction, melting, dissolution or degradation) lose their particulate identity during the process of manufacturing the composite (including all hardening steps) and/or ii) particles having a least one dimension smaller than the diameter of the fibers in the fiber mat.

Examples of the former types of solid materials include various curing agents and/or catalysts. Curing agents and/or catalysts may be provided as solid particles to provide a latent, high-temperature cure, for example. This is commonly the case in epoxy resin systems. During the curing steps, these materials melt, dissolve and/or react, losing their particulate nature and in some cases forming part of the resin phase.

The latter type of solid components of the resin composition are particles that preferably have at least two dimensions smaller than the diameter of the fibers of the fiber mat. The filler particles may have at least one dimension and preferably at least two dimensions that are no greater than 50%, than the diameter of the fibers. The third dimension of the filler particles may be substantially greater and may, for example, exceed the diameter of the fibers. The largest dimension may be, for example, up to 30 $\mu$m. In specific embodiments, the filler particles are plate-like particles that have a thickness (smallest dimension) of 1 to 100 nm, especially 5 to 50 nm, and lengths in the transverse dimensions of up to 100 $\mu$m, especially up to 50 $\mu$m. In other specific embodiments, the filler particles take the form of nanofibers or nanotubes that have diameters from 1 to 100 nm, especially 5 to 50 nm, and lengths of 50 nm up to 100 mm, preferably up to 25 mm. Especially preferred are nanofibers or nanotubes having lengths of 100 nm to 10 mm.

It is preferred that the resin composition excludes filler particles of thermally and chemically stable materials such as carbon, graphite, clays, zeolites and other inorganic materials, metals, ceramics and thermoset polymers, which have a smallest dimension equal to or larger than the diameter of the fibers. In some embodiments, the resin composition excludes thermally and chemically stable filler particles that have a smallest dimension larger than the diameter of the fibers.

The resin composition in some embodiments has a Brookfield viscosity, at the temperature of impregnation, of no more than 10,000, preferably no more than 3000 mPa•s.

The resin composition may contain various optional ingredients. Optional ingredients include, for example, one or more of the following: a mold release agent; a solvent and/or diluent, a colorant, a toughening agent, a flow modifier, an adhesion promoter, a stabilizer, a plasticizer, a catalyst deactivator, a flame retardant, and mixtures of any two or more thereof.

Generally, the amount of these optional ingredients, if present at all, may be for example, from 0 weight-% to about 70 weight-%, based on the entire weight of the liquid resin composition. These other ingredients, if present at all, may constitute up to 40 weight-%, of the liquid resin composition.

A highly preferred type of resin composition has a liquid phase that contains one or more epoxy resins. Such a resin composition will also contain one or more epoxy hardeners and preferably one or more catalysts for the reaction of the epoxy resin(s) and hardener(s). The hardener(s) and catalyst(s) may be present in the liquid phase or in the form of one or more particulate solids.

The epoxy resin is a liquid epoxy resin or a liquid mixture of epoxy resins. The epoxy resin or mixture of resins should contain an average of at least 1.8, preferably at least, two epoxide groups per molecule. The epoxy resin(s) may be aliphatic, cycloaliphatic, aromatic, cyclic, heterocyclic or mixtures thereof. Epoxy resins useful in the present disclosure include those described, for example, in U.S. Patent Nos. 3,018,262, 5,137,990, 6,451,898, 7,163,973, 6,887,574, 6,632,893, 6,242,083, 7,037,958, 6,572,971, 6,153,719, and 5,405,688; WO 2006/052727; U.S. Patent Published Patent Applications 2006-0293172 and 2005-0171237.

Among the useful epoxy resins are glycidyl ethers of polyphenols. The polyphenol may be, for example, bisphenol; a halogenated bisphenol such as tetramethyl-tetrabromobisphenol or tetramethyltribromobisphenol; a bisphenol such as bisphenol A, bisphenol AP (1,1-bis(4-hydroxyphenyl)-1-phenyl ethane), bisphenol F, or bisphenol K; an alkylated bisphenol; a trisphenol; A; a novolac resin; a cresol novolac resin, a phenol novolac resin; or a mixture of any two or more thereof.

Other useful aromatic epoxy resins include polyglycidyl ethers of aromatic di- and polyamines and aminophenols, polyglycidyl ethers of aliphatic alcohols, carboxylic acids and amines such as polyglycols, polyalkylene glycols, cycloaliphatic polyols, polycarboxylic acids and epoxy terminated oxazolidone resins.

Suitable commercially available epoxy resin compounds include those available from Olin Corporation, such as the D.E.R.™ 300 series of liquid epoxy resins, the D.E.N.™ 400 series of epoxy novolac resins, the D.E.R.™ 500 series, the D.E.R.™ 600 series, the D.E.R.™ 700 series of solid epoxy resins, the DER 858 epoxy terminated oxazolidone resin and VORAFORCE™ epoxy resins.

Each epoxy resin may have an average epoxy equivalent weight of, for example, 100 to 5000, especially 125 to 300 or 150 to 250. An especially preferred epoxy resin most is one or more diglycidyl ethers of a bisphenol having an epoxy equivalent weight of 170 to 225, or a mixture of one or more thereof with one or more epoxy novolac and/or epoxy cresol novolac resins.

Suitable epoxy hardeners include those described in "Chemistry and Technology of the Epoxy Resins" B. Ellis (Ed.) Chapman Hall, New York, 1993 and in "Epoxy Resins Chemistry and Technology", edited by C. A. May, Marcel Dekker, New York, 2nd edition, 1988. The epoxy hardener(s) may be liquids at the application temperature, or dissolved in one or more other components of the liquid resin composition, but can also be present in the form of a particulate solid. Examples of useful epoxy resin hardeners include aliphatic amines, aromatic amines, hindered cycloaliphatic amines, thiol compounds, phenolic compounds, boron trichloride/amine and boron trifluoride/amine complexes, melamine, diallylmelamine, hydrazides, aminotriazoles, and various guanamines.

Generally, the hardener is present in the epoxy resin composition in an amount sufficient to provide 0.7 to 1.8 equivalents of epoxide-reactive groups per equivalent of epoxide group. In some embodiments, this ratio is 0.9 to 1.3 equivalents of epoxide-reactive groups per equivalent of epoxide groups.

The epoxy resin composition typically will include one or more catalysts such as those described in "Chemistry and Technology of the Epoxy Resins" B. Ellis (Ed.) Chapman Hall, New York, 1993 and in "Epoxy Resins Chemistry and Technology", edited by C. A. May, Marcel Dekker, New York, 2nd edition, 1988.

The fiber reinforced composite is made in some embodiments by first forming an impregnated multilayer fiber preform. The preform includes the fiber mat, the nanofiber sheet, and the resin composition. The nanofiber sheet is coextensive with a major surface of the impregnated preform, and the monofilaments of the nanofiber sheet are oriented substantially parallel to that major surface as described before. The liquid phase of the resin composition impregnates the fiber mat and nanofiber sheet such that the impregnated multilayer preform has a porosity of at most 2 volume-%.

The impregnated multilayer preform can be made in various ways.

In one method, the nanofiber sheet is applied to a major surface of the fiber mat and the resulting multilayer preform then is impregnated with the resin composition. The multilayer preform can be prepared by simply bringing fiber mat and nanofiber sheet together at a major surface of the fiber mat. Simple stacking often is all that is necessary. This can be done, for example, in a mold in which impregnation with the resin and solidification of the resin takes place. If desired, the fiber mat and nanofiber sheet can be held together mechanically such as by stitching, clamping or the like to hold them together until they are used to make the composite. It is highly preferred to exclude any adhesive or other layer between the nanofiber sheet and fiber mat. The multilayer preform thus formed then is impregnated with the resin composition. The resin composition is applied to at least one surface of the multilayer preform such that the liquid resin phase of the resin composition permeates into the nanofiber sheet and the fiber mat. The nanofiber sheet and fiber mat become embedded in the liquid phase of the resin composition. In one suitable process, the fiber mass is held in or passes through a cavity into which the resin composition is injected under pressure, contacting one or more surfaces of the fiber mass and penetrating into it. The atmosphere in the cavity may be partially or entirely evacuated before injecting the liquid resin composition. The cavity may be a mold. Such a mold preferably has at least one polished surface for producing a composite having a highly smooth appearance. In another suitable process, the resin composition can be sprayed or otherwise applied to a bed of the fibers or to a woven or braided fabric.

In another method, the nanofiber sheet, fiber mat and resin composition including a liquid phase are brought together simultaneously, such as, for example, bringing the fiber mat, nanofiber sheet and resin composition together all at once and passing them through a constricted space such as between rollers or between platens to force the resin composition into the fiber mat and nanofiber sheet.

In a third method, the resin composition is applied to the nanofiber sheet and fiber mat as a solid layer, which is subsequently heat-softened so at least a portion of the resin composition forms a liquid phase that impregnates the fiber layers. In this method, the solid layer of the resin composition can be applied to either the fiber mat or the nanofiber sheet, or both, and/or between the fiber mat and nanofiber sheet, to form a multilayer structure which is subsequently heated to heat-soften the resin composition and allow impregnation to take place.

In a fourth method, the nanofiber sheet and fiber mat are impregnated separately and then stacked. In this method, the resin composition may be partially solidified before the impregnated nanofiber sheet and fiber mat are stacked, provided that the resin composition remains heat-softenable so it upon a subsequent heating step forms a liquid phase that permeates between the fibers of the fiber mat and nanofiber sheet to fill the interstitial voids and produce an impregnated multilayer preform having a void volume of 3% or less.

Various industrial processes for making composites, such as pultrusion, prepregging, resin transfer molding, resin transfer molding light, vacuum assisted resin transfer molding, sheet molding compound (SMC), bulk molding compound (BMC), liquid injection molding, and various resin infusion processes such as double bag infusion, controlled atmospheric pressure resin infusion, modified vacuum infusion, resin film injection, resin injection under flexible tooling, Seeman Composites resin infusion molding process, and vacuum assisted resin injection molding are all suitable for the step of embedding the fiber mass in the liquid resin.

The fiber-reinforced composite is then formed by solidifying the liquid phase of the resin composition. This can be done by cooling, curing or both cooling and curing the resin composition. The impregnated nanofiber sheet is coextensive with a major surface of the fiber-reinforced composite with the monofilaments of the nanofiber sheet being oriented substantially parallel to said major surface.

The nanofiber sheet is coextensive with at least one surface of the impregnated multilayer (and the resulting composite) and so there is no separate resin layer on at least that surface. This can be done, for example, by setting the combined heights of the fiber mat and nanofiber sheet equal to the depth of the space in which they are held during the step of impregnation and/or solidifying the liquid phase of the resin composition.

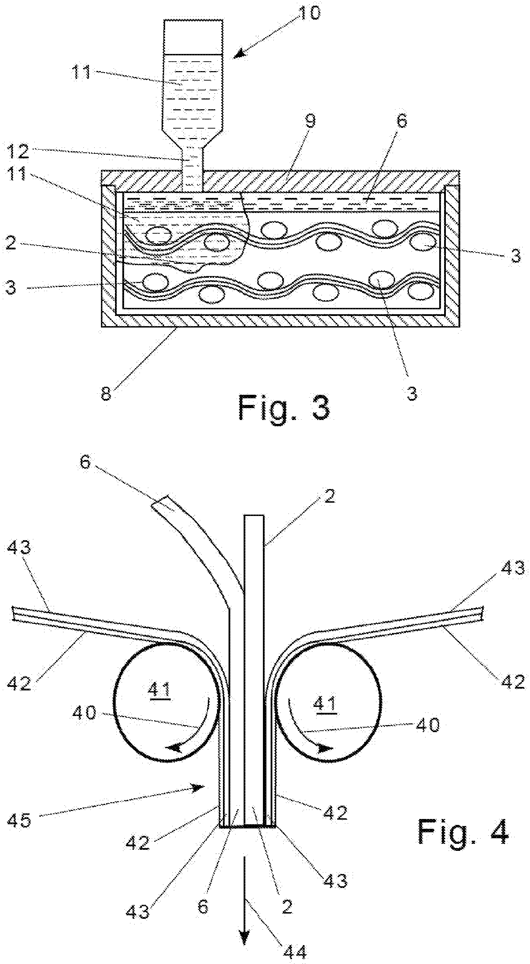

One embodiment of the process of the invention is illustrated in Figure 3. In Figure 3, fiber mat 2 is contained within a mold defined by mold halves 8 and 9. Nanofiber sheet 6 is laid on top of fiber mat 2. Conversely, nanofiber sheet 6 may be placed in the mold bottom, and fiber mat 2 laid atop of it. If desired, nanofiber sheet 6 may wrap around fiber mat 2, or separate layers of nanofiber sheet may be placed above and below fiber mat 2, provided that at least one major surface of fiber mat 2 is covered with a nanofiber sheet. If desired, all surfaces of fiber mat 2 may be covered with a nanofiber sheet. As shown in Figure 3, nanofiber sheet 6 is an outermost layer which will be directly in contact with either or both of mold halves 8 and 9, so that it will be coextensive with at least one major surface of the finished composite.

A resin composition 11 as described before is contained in a delivery system shown generally at 10. Delivery system 10 is adapted to inject resin composition 11 into the mold via port 12. As shown in Figure 3, the liquid phase of the resin composition has partially permeated through nanofiber sheet 6 and fiber mat 2 to impregnate each of them. Enough of resin composition 11 is introduced into the mold to permeate the entirety of nanofiber sheet 6 and fiber mat 2 produce a void volume of 2% or less. When the mold is filled, resin composition is solidified by cooling and/or curing as described before.

An embodiment of an alternative infusion process is illustrated in Figure 4. In Figure 4, separate preformed films of resin composition 43 are supplied on release liners 42. Certain dimensions of the fiber mats, fibers, monofilaments and monofilament sheets are exaggerated in the Figures for ease of illustration. One film of resin composition 43 is applied to nanofiber sheet 6 and the other file of resin composition 43 is applied to fiber mat 2. In this method, nanofiber sheet 6, fiber mat 2 and both films of resin composition 43 are passed between pressurized nip rollers 41, which in the embodiment shown rotate in the directions indicated by arrows 40, pulling nanofiber sheet 6, fiber mat 2 and the films of resin composition 43 in the direction indicated by arrow 44 to form impregnated multilayer 45. Alternatively, one or both of nip rollers 41 can rotate in the opposite direction from that shown; in such a case, an additional means for moving the materials through the nip rollers is generally necessary.

Resin composition 43 may be a solid, a liquid, or a suspension of solids in a liquid phase as described above. If resin composition 43 is a liquid or contains a liquid phase, enough pressure preferably is applied by nip rollers 41 to mechanically infuse at least the liquid portion of resin composition 43 into nanofiber sheet 6 and fiber 2 to produce the impregnated multilayer.

If resin composition 43 is solid, nip rollers 41 may be heated to heat-soften resin composition 43 so that a liquid phase forms and infuses into nanofiber sheet and fiber mat 2. The pressure applied by nip rollers 41 in such a case preferably is sufficient to cause resin composition 43 to infuse into nanofiber sheet 6 and fiber mat 2, forming impregnated multilayer 45. Other means of heating a solid resin composition 43, such as radiant heating, performing the process in a heated region such as an oven, microwave heating, and the like, can be used.

Alternatively, resin composition 43 can be provided as a solid and maintained in a solid state as it passes through nip rollers 41. In such a case, a layered structure that includes separate layers 43 of the resin composition, nanofiber sheet 6 and fiber mat 2 is formed. Impregnation is performed in a subsequent step by heating the layered structure under sufficient pressure to cause the layers of resin composition 43 to infuse into nanofiber sheet 6 and fiber mat 2. Impregnation can be performed, for example, in a subsequent molding step.

In a variation of this embodiment, a film of the resin composition is applied to only to nanofiber sheet 6 or to fiber mat 2, and/or is applied between nanofibers sheet 6 and fiber mat 2, followed by compression to impregnate nanofiber sheet 6 and fiber mat 2.

Yet another suitable embodiment includes a wet compression process in which the resin composition is dispensed on top of the fiber mass in a tool that is subsequently shut. The liquid phase of the resin composition infuses into the fiber mass under the pressure and temperature of the molding process.

Once the fiber mass has been infused with the resin composition, the liquid phase of the resin composition is solidified by cooling and/or curing. Thermoplastic resins are solidified by cooling them to a temperature below their Vicat B50 softening temperature, preferably to a temperature at least 20°C or at least 40°C below their Vicat B50 softening temperature. Preferably, thermoplastic resins are solidified by cooling them to a temperature of 40°C or lower.

Thermosetting resins can be solidified by cooling if the liquid phase of the resin composition is a room temperature solid. If a thermosetting resin composition is a room temperature liquid, it is solidified at least partially by curing. Curing is generally continued until the resin composition attains a glass transition temperature of at least 40°C, preferably at least 55°C. The curing step can be performed at room temperature or an elevated temperature of up to 220°C, as may be suitable for the particular thermosetting resin system.

In some embodiments, a thermosetting resin is only partially cured during the solidification step. Such partial curing is often referred to in the art as B-staging. During B-staging, the thermosetting resin composition is cured enough to form a resin that is solid at room temperature but remains heat-softenable, so the composite can be shaped in a subsequent step by applying heat, followed by performing additional curing to produce a final composite.

The composite can be shaped if desired during the solidification step by, for example, performing the solidification step in a mold or form that imparts a desired geometry to the composite. If the resin composition remains thermoplastic after the solidification step (as when the resin composition is a thermoplastic or the resin composition is thermosetting but is only B-staged during the solidification step), shaping can be performed in a later step by heating the composite to soften the resin phase, performing the shaping step, and then further solidifying the resin by cooling and/or further curing.

The product produced in the process is a fiber reinforced composite that comprises a multilayer preform and a solid resin phase. The multilayer preform includes the fiber mat and nanofiber sheet as described before. The nanofiber sheet resides on a major surface of the fiber mat and is coextensive with a surface of the fiber reinforced composite. The solid resin phase permeates the fiber mat and the nanofiber sheet, adheres the fiber mat to the nanofiber sheet and fills interstitial spaces between the fibers of the fiber mat and between the monofilaments of the nanofiber sheet such that the fiber reinforced composite has a void volume of at most 2%.

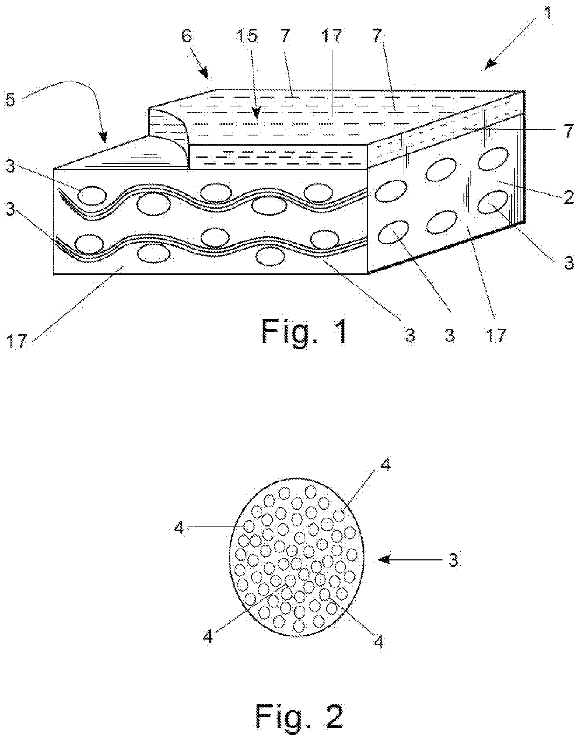

An embodiment of a fiber-reinforced composite of the invention is shown in Figure 1. In Figure 1, fiber-reinforced composite 1 includes fiber mat 2 which has major surface 5. Nanofiber sheet 6 resides on top of major surface 5 of fiber mat 2, and is coextensive with top surface 15 of fiber-reinforced composite 1.

Nanofiber sheet 6 is composed of monofilaments 7, which are oriented substantially parallel to the plane of top surface 15 of fiber-reinforced composite 1. In the embodiment shown, fiber mat 2 is made up of woven fiber rovings 3. As shown in Figure 2, each of rovings 3 is made up of a large number of individual fibers 4, the number of which is arbitrarily shown in Figure 4. The diameters of rovings 3, individual fibers 4 and monofilaments 7 all are greatly exaggerated for purposes of illustration. Each of nanofiber sheet 6 and fiber mat 2 are impregnated with solid resin composition 17, which fills interstitial spaces between monofilaments 7, fiber rovings 3 and individual fibers 4 and adheres nanofiber sheet 6 to fiber mat 2. In Figure 1, the relative thicknesses of fiber mat 2 and nanofiber sheet 6 have been arbitrarily selected and exaggerated for purposes of illustration.

The fiber content of the fiber-reinforced composite may be, for example, 5 to 95% of the total weight of the composite, i.e., the combined weight of the fibers and the resin phase. Preferred fiber contents are 20 to 90 weight-%, on the same basis.

The thickness of the fiber-reinforced composite may be, for example, 0.1 to 100 mm.

The composite may have one or more other layers in addition to the resin-impregnated nanofiber sheet and resin-impregnated fiber mat. In particular, a second resin-impregnated nanofiber sheet may be present on the opposing major surface of the composite, forming a sandwich structure having resin-impregnated nanofiber sheets as the surface layers and a central layer of resin-impregnated fiber mat.

The process of the invention is useful, for example, to make vehicle structural and non-structural parts, body panels, deck lids, for automobiles, trucks, train cars, golf carts, all-terrain vehicles, boat hulls and decks, jet-ski hulls and decks, go-carts, farm equipment, lawn mowers and the like. It is useful to make aircraft skins. Other uses include luggage and panels for consumer and industrial appliances, and sporting goods such as hockey sticks, skis, snowboards and tennis rackets.

The following examples are provided to illustrate the invention, wherein the scope of protection is defined in the appended claims. All parts and percentages are by weight unless otherwise indicated.

**Example 1 and Comparative Sample A**

Comparative Sample A is made in the following general manner:
Uni-directional carbon fiber fabrics are made with 12K-A42 rovings available from DowAksa, Istanbul, Turkey. The rovings have a weight of 800 g/1000 meters of length and a density of 1.8 g/cm$^3$. The rovings are made of 12,000 individual carbon fibers that each have a diameter of approximately 7 $\mu$m. They are manually placed into a two-piece, oil-heated mold with cavity dimensions of 540 mm in length, 290 mm in width, and 2 mm in height, which is held in a 120-ton hydraulic up-stroke press from Wemhöner (model nr. 100 K-120). The height of the fabrics is equal to that of the mold cavity so that the fiber mass extends to the top and bottom surfaces of the resulting composite. The mold is then closed and evacuated, and an epoxy resin formulation injected into the mold cavity under pressure using a Krauss-Maffei RSC 4/4 resin transfer molding machine. The epoxy resin formulation contains 100 parts of VORAFORCE 5310 epoxy resin available from The Dow Chemical Company, filler particles (if any) as indicated below, 16 parts of VORAFORCE™ 5350 epoxy hardener available from The Dow Chemical Company and 2 parts of VORAFORCE 5370 internal mold release agent. This amount of epoxy resin formulation is sufficient to produce a solid, void-free composite having the same dimensions as the mold cavity. The mold is heated to 130°C at which temperature the resin is allowed to cure for 2 minutes to form a fiber-reinforced composite. The mold is then opened and the composite removed from the mold and allowed to cool to room temperature. This process is repeated to produce samples to be tested bare and after painting. The painted samples are sanded and polished after molding to achieve a Class A automotive surface. Painting is done by applying a layer of a primer, a base coat and a topcoat to the bottom layer of the composite.

Example 1 is made in the same manner, except that a 25 $\mu$m layer of Miralon® pure carbon nanotube sheet is placed in the bottom of the mold before loading the fiber rovings. This produces a composite in which the nanotube sheet is coextensive with the bottom major surface.

In each case, the surface characteristics of the bottom surfaces of these composites are evaluated by white light interferometry, using a Wyko NT9100 surface profiler equipped with a 50X optical objective lens with a field of view of 127 X 95$\mu$m. Five surface locations are evaluated for each sample. Surface roughness parameters Rt and $R_z$ are determined in each case using JMP® Pro 11 software (SAS Institute Inc., Cary, NC).

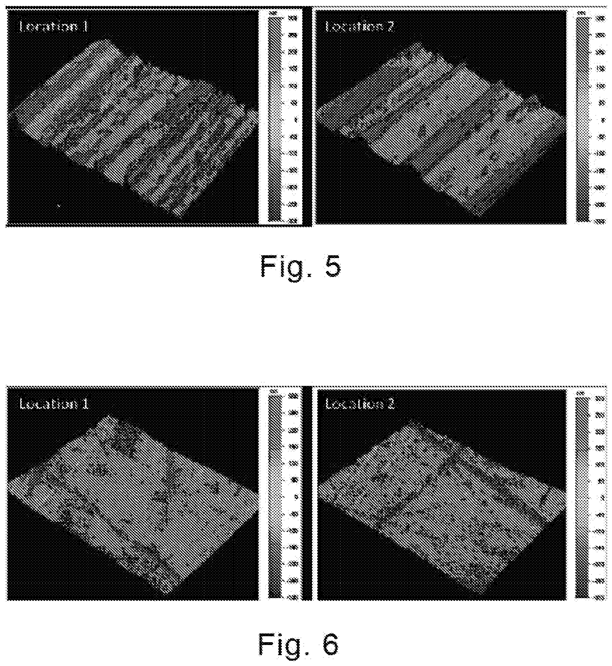

The surface roughness parameters Rt and $R_z$ of the unpainted Comparative Sample A are 5.09 $\mu$m and 3.20 $\mu$m respectively. A micrograph of an unpainted surface of Comparative Sample A is shown in Figure 5.

By painting Comparative Sample A, the surface roughness parameters Rt and $R_z$ are reduced to 0.61 $\mu$m and 0.42 $\mu$m respectively.

The surface roughness parameters Rt and $R_z$ of Example 1 respectively are only 1.64 and 1.17 $\mu$m. These values are very much lower than the unpainted version of Comparative Sample A and are nearly as good as those of painted Comparative Sample A. This invention therefore provides for a reduction in surface roughness comparable to that achieved only by painting the conventional material. Painting of course will serve to reduce the surface roughness of Example 1 even further.

A micrograph of an unpainted surface of Comparative Sample A is shown in Figure 6. The large reduction in surface roughness produced with this disclosure is readily seen by comparing Figures 5 and 6.

**Claims**

**1.** A process for making a fiber reinforced composite, comprising

    a) forming an impregnated multilayer fiber preform comprising

        i) a fiber mat (2) that includes mass of fibers that have individual fiber diameters of at least 250 nm,
        ii) a nanofiber sheet (6) applied to the fiber mat, wherein the nanofiber sheet: A) is composed of monofilaments having a diameter of at most 100 nanometers, an aspect ratio of at least 3 and being made of a material that does not melt or degrade under the conditions of step b); B) has a thickness of at most 1 mm and C) has a porosity of at least 30%; wherein the impregnated nanofiber sheet is coextensive with a major surface of the impregnated preform, and the monofilaments of the nanofiber sheet are oriented substantially parallel to said major surface; and
        iii) a resin composition (11) that includes a liquid phase which impregnates the fiber mat and nanofiber sheet such that the impregnated multilayer preform has a porosity of at most 2 volume-%; and

b) solidifying the liquid phase of the resin composition by cooling, curing or both cooling and curing the resin composition to form the fiber reinforced composite in which the impregnated nanofiber sheet is coextensive with a major surface of the fiber reinforced composite with the monofilaments of the nanofiber sheet being oriented substantially parallel to said major surface.

2. The process of claim 1 wherein step a) includes the steps of:

a) forming a multilayer fiber preform by applying the nanofiber sheet to a major surface of the fiber mat such that the monofilaments of the porous nanofiber sheet are oriented substantially parallel to said major surface to which the porous nanofiber sheet is applied;

b) forming the impregnated preform by applying the resin composition to at least one surface of the multilayer preform such that the liquid resin phase of the resin composition permeates into the nanofiber sheet and the fiber mat to form a resin-impregnated fiber mass in which the nanofiber sheet and fiber become embedded in the liquid phase of the resin composition.

3. The process of claim 1 or 2 wherein the thickness of the nanofiber sheet is at most 100 $\mu$m, and/or the nanofibers have diameters of 5 to 50 nm.

4. The process of any preceding claim wherein the fiber mat includes multifilament rovings having 300 to 30,000 filaments per roving and a diameter of 25 $\mu$m to 1 mm.

5. The process of any preceding claim, wherein the liquid resin phase includes at least one epoxy resin, optionally wherein the resin composition includes a hardener for the epoxy resin and a catalyst for the reaction of the epoxy resin and the hardener.

6. The process of any preceding claim, wherein the hardening step includes a step of at least partially curing the resin composition and/or a step of cooling the resin composition.

7. The process of any preceding claim, wherein the liquid resin phase includes at least one molten thermoplastic polymer.

8. The process of any preceding claim wherein the steps of applying the resin composition to the fiber mass and permeating the liquid resin phase of resin composition into the fiber mass includes the steps of disposing the fiber mass in a mold (8, 9), closing the mold and injecting the resin composition into the mold.

9. The process of any preceding claim wherein the steps of applying the resin composition to the fiber mass and permeating the liquid resin phase of resin composition into the fiber mass includes the steps of forming a film of the resin composition and applying the film to the fiber mass by compressing the film of the resin composition against the fiber mass to infuse the liquid phase of the resin composition into the fiber mass.

10. The process of any preceding claim wherein the steps of applying the resin composition to the fiber mass and permeating the liquid resin phase of resin composition into the fiber mass includes the steps of disposing the fiber mass in an open cavity, dispensing the resin composition on top of the fiber mass in the open cavity, closing the cavity and applying pressure.

11. The process of any preceding claim wherein the resin composition is devoid of filler particles of thermally and chemically stable materials that have a smallest dimension equal to or larger than the diameter of the fibers.

12. The process of any preceding claim, wherein the resin composition excludes thermally and chemically stable filler particles that have a smallest dimension larger than 20% of the diameter of the fibers.

13. A fiber reinforced composite comprising a multilayer preform that includes

a) a fiber mat (2) layer that includes a mass of fibers that have individual fiber diameters of at least 250 nm, and

b) a nanofiber sheet (6), wherein the nanofiber sheet: i) is composed of monofilaments having a diameter of at most 100 nanometers, an aspect ratio of at least 3 and being made of a material that does not melt or degrade under the conditions of solidifying the liquid phase of the resin in c), ii) has a thickness of at most 10 mm; and iii) resides on a major surface of the fiber mat, being coextensive with a major surface of the fiber reinforced composite with the monofilaments of the nanofiber sheet being oriented substantially parallel to the major surface of the fiber reinforced composite, and

c) a solid resin phase that permeates the fiber mat and the nanofiber sheet, adheres the fiber mat to the nanofiber sheet and fills interstitial spaces between the fibers of the fiber mat and between the monofilaments of the nanofiber sheet such that the fiber-reinforced composite has a void volume of at most 2%.

14. The fiber reinforced composite of claim 13 wherein the thickness of the nanofiber sheet is at most 100 $\mu$m, and/or the nanofibers have diameters of 5 to 50 nm.

15. The fiber reinforced composite of any of claims 13-14 wherein the fiber mat includes multifilament rovings having 300 to 30,000 filaments per roving and a diameter of 25 $\mu$m to 1 mm, and/or wherein the solid resin phase includes a cured epoxy resin.

**Patentansprüche**

1. Ein Verfahren zum Herstellen eines faserverstärkten Verbundstoffs, beinhaltend:

a) Bilden eines imprägnierten mehrschichtigen Faservorformlings, beinhaltend:

i) ein Faservlies (2), das eine Masse von Fasern umfasst, die Durchmesser individueller Fasern von mindestens 250 nm aufweisen,
ii) ein Nanofaserflächengebilde (6), das auf das Faservlies aufgebracht wird, wobei das Nanofaserflächengebilde A) aus Monofilamenten besteht, die einen Durchmesser von höchstens 100 Nanometern, ein Aspektverhältnis von mindestens 3 aufweisen und aus einem Material hergestellt sind, das unter den Bedingungen von Schritt b) nicht schmilzt oder abgebaut wird; B) eine Dicke von höchstens 1 mm aufweist und C) eine Porosität von mindestens 30 % aufweist; wobei das imprägnierte Nanofaserflächengebilde mit einer Hauptoberfläche des imprägnierten Vorformlings koextensiv ist und die Monofilamente des Nanofaserflächengebildes zu der Hauptoberfläche im Wesentlichen parallel ausgerichtet sind; und
iii) eine Harzzusammensetzung (11), die eine flüssige Phase umfasst, die das Faservlies und das Nanofaserflächengebilde so imprägniert, dass der imprägnierte mehrschichtige Vorformling eine Porosität von höchstens 2 Volumen-% aufweist; und

b) Verfestigen der flüssigen Phase der Harzzusammensetzung durch Abkühlen, Härten oder sowohl Abkühlen als auch Härten der Harzzusammensetzung, um den faserverstärkten Verbundstoff zu bilden, in dem das imprägnierte Nanofaserflächengebilde mit einer Hauptoberfläche des faserverstärkten Verbundstoffs koextensiv ist, wobei die Monofilamente des Nanofaserflächengebildes zu der Hauptoberfläche im Wesentlichen parallel ausgerichtet sind.

2. Verfahren gemäß Anspruch 1, wobei Schritt a) die folgenden Schritte umfasst:

a) Bilden eines mehrschichtigen Faservorformlings durch das Aufbringen des Nanofaserflächengebildes auf eine Hauptoberfläche des Faservlieses, so dass die Monofilamente des porösen Nanofaserflächengebildes zu der Hauptoberfläche, auf die das poröse Nanofaserflächengebilde aufgebracht wird, im Wesentlichen parallel ausgerichtet sind;
b) Bilden des imprägnierten Vorformlings durch das Aufbringen der Harzzusammensetzung auf mindestens eine Oberfläche des mehrschichtigen Vorformlings, so dass die flüssige Harzphase der Harzzusammensetzung in das Nanofaserflächengebilde und das Faservlies eindringt, um eine harzimprägnierte Fasermasse zu bilden, in der das Nanofaserflächengebilde und das Faservlies in die flüssige Phase der Harzzusammensetzung eingebettet werden.

3. Verfahren gemäß Anspruch 1 oder 2, wobei die Dicke des Nanofaserflächengebildes höchstens 100 $\mu$m beträgt und/oder die Nanofasern Durchmesser von 5 bis 50 nm aufweisen.

4. Verfahren gemäß einem der vorhergehenden Ansprüche, wobei das Faservlies Multifilamentrovings umfasst, die 300 bis 30 000 Filamente pro Roving und einen Durchmesser von 25 $\mu$m bis 1 mm aufweisen.

5. Verfahren gemäß einem der vorhergehenden Ansprüche, wobei die flüssige Harzphase mindestens ein Epoxidharz umfasst, wobei optional die Harzzusammensetzung ein Härtemittel für das Epoxidharz und einen Katalysator für die Reaktion des Epoxidharzes und des Härtemittels umfasst.

6. Verfahren gemäß einem der vorhergehenden Ansprüche, wobei der Härtungsschritt einen Schritt des mindestens teilweisen Härtens der Harzzusammensetzung und/oder einen Schritt des Abkühlens der Harzzusammensetzung umfasst.

7. Verfahren gemäß einem der vorhergehenden Ansprüche, wobei die flüssige Harzphase mindestens ein geschmolzenes thermoplastisches Polymer umfasst.

8. Verfahren gemäß einem der vorhergehenden Ansprüche, wobei die Schritte des Aufbringens der Harzzusammensetzung auf die Fasermasse und des Eindringens der flüssigen Harzphase der Harzzusammensetzung in die Fasermasse die Schritte des Ablagerns der Fasermasse in einer Form (8, 9), des Schließens der Form und des Einspritzens der Harzzusammensetzung in die Form umfassen.

9. Verfahren gemäß einem der vorhergehenden Ansprüche, wobei die Schritte des Aufbringens der Harzzusammensetzung auf die Fasermasse und des Eindringens der flüssigen Harzphase der Harzzusammensetzung in die Fasermasse die Schritte des Bildens eines Films der Harzzusammensetzung und des Aufbringens des Films auf die Fasermasse durch Komprimieren des Films der Harzzusammensetzung gegen die Fasermasse, um die Fasermasse mit der flüssigen Phase der Harzzusammensetzung zu tränken, umfassen.

10. Verfahren gemäß einem der vorhergehenden Ansprüche, wobei die Schritte des Aufbringens der Harzzusammensetzung auf die Fasermasse und des Eindringens der flüssigen Harzphase der Harzzusammensetzung in die Fasermasse die Schritte des Ablagerns der Fasermasse in einer offenen Kavität, des Abgebens der Harzzusammensetzung auf die Fasermasse in der offenen Kavität, des Schließens der Kavität und des Anwendens von Druck umfassen.

11. Verfahren gemäß einem der vorhergehenden Ansprüche, wobei die Harzzusammensetzung frei von Füllstoffteilchen aus thermisch und chemisch stabilen Materialien, die eine kleinste Abmessung gleich oder größer als der Durchmesser der Fasern aufweisen, ist.

12. Verfahren gemäß einem der vorhergehenden Ansprüche, wobei die Harzzusammensetzung thermisch und chemisch stabile Füllstoffteilchen, die eine kleinste Abmessung von größer als 20 % des Durchmessers der Fasern aufweisen, ausschließt.

13. Ein faserverstärkter Verbundstoff, beinhaltend einen mehrschichtigen Vorformling, der Folgendes umfasst:

   a) eine Faservlies(2)-Schicht, die eine Masse von Fasern umfasst, die Durchmesser individueller Fasern von mindestens 250 nm aufweisen, und

   b) ein Nanofaserflächengebilde (6), wobei das Nanofaserflächengebilde i) aus Monofilamenten besteht, die einen Durchmesser von höchstens 100 Nanometern, ein Aspektverhältnis von mindestens 3 aufweisen und aus einem Material hergestellt sind, das unter den Bedingungen des Verfestigens der flüssigen Phase des Harzes in c) nicht schmilzt oder abgebaut wird, ii) eine Dicke von höchstens 10 mm aufweist; und iii) sich auf einer Hauptoberfläche des Faservlieses befindet, wobei es mit einer Hauptoberfläche des faserverstärkten Verbundstoffs koextensiv ist, wobei die Monofilamente des Nanofaserflächengebildes zu der Hauptoberfläche des faserverstärkten Verbundstoffs im Wesentlichen parallel ausgerichtet sind, und

   c) eine feste Harzphase, die das Faservlies und das Nanofaserflächengebilde durchdringt, das Faservlies an das Nanofaserflächengebilde klebt und Zwischenräume zwischen den Fasern des Faservlieses und zwischen den Monofilamenten des Nanofaserflächengebildes so füllt, dass der faserverstärkte Verbundstoff ein Hohlraumvolumen von höchstens 2 % aufweist.

14. Faserverstärkter Verbundstoff gemäß Anspruch 13, wobei die Dicke des Nanofaserflächengebildes höchstens 100 $\mu$m beträgt und/oder die Nanofasern Durchmesser von 5 bis 50 nm aufweisen.

15. Faserverstärkter Verbundstoff gemäß einem der Ansprüche 13-14, wobei das Faservlies Multifilamentrovings umfasst, die 300 bis 30 000 Filamente pro Roving und einen Durchmesser von 25 $\mu$m bis 1 mm aufweisen, und/oder wobei die feste Harzphase ein gehärtetes Epoxidharz umfasst.

**Revendications**

1. Un procédé pour la réalisation d'un composite renforcé par des fibres, comprenant le fait de

   a) former une préforme de fibres multicouche imprégnée comprenant

   i) un mat de fibres (2) qui inclut une masse de fibres qui ont des diamètres de fibres individuelles d'au moins 250 nm,
   ii) une feuille de nanofibres (6) appliquée sur le mat de fibres, où la feuille de nanofibres : A) est composée de monofilaments qui ont un diamètre d'au plus 100 nanomètres, un rapport d'aspect d'au moins 3 et qui sont réalisés en un matériau qui ne fond pas ou ne se dégrade pas dans les conditions de l'étape b) ; B) a une épaisseur d'au plus 1 mm et C) a une porosité d'au moins 30 % ; où la feuille de nanofibres imprégnée est coextensive à une surface principale de la préforme imprégnée, et les monofilaments de la feuille de nanofibres sont orientés de manière substantiellement parallèle à ladite surface principale ; et
   iii) une composition de résine (11) qui inclut une phase liquide, laquelle imprègne le mat de fibres et la feuille de nanofibres de telle sorte que la préforme multicouche imprégnée a une porosité d'au plus 2 % en volume ; et

   b) solidifier la phase liquide de la composition de résine par le fait de refroidir, de traiter ou à la fois de refroidir et traiter la composition de résine afin de former le composite renforcé par des fibres dans lequel la feuille de nanofibres imprégnée est coextensive à une surface principale du composite renforcé par des fibres, les monofilaments de la feuille de nanofibres étant orientés de manière substantiellement parallèle à ladite surface principale.

2. Le procédé de la revendication 1 où l'étape a) inclut les étapes consistant à :

   a) former une préforme de fibres multicouche par le fait d'appliquer la feuille de nanofibres sur une surface principale du mat de fibres de telle sorte que les monofilaments de la feuille de nanofibres poreuse sont orientés de manière substantiellement parallèle à ladite surface principale sur laquelle la feuille de nanofibres poreuse est appliquée ;
   b) former la préforme imprégnée par le fait d'appliquer la composition de résine sur au moins une surface de la préforme multicouche de telle sorte que la phase de résine liquide de la composition de résine s'infiltre dans la feuille de nanofibres et le mat de fibres afin de former une masse de fibres imprégnée de résine dans laquelle la feuille de nanofibres et de la fibre se retrouvent enrobées dans la phase liquide de la composition de résine.

3. Le procédé de la revendication 1 ou de la revendication 2 où l'épaisseur de la feuille de nanofibres est d'au plus 100 $\mu$m et/ou les nanofibres ont des diamètres de 5 à 50 nm.

4. Le procédé de n'importe quelle revendication précédente où le mat de fibres inclut des rovings multifilament qui ont de 300 à 30 000 filaments par roving et un diamètre de 25 $\mu$m à 1 mm.

5. Le procédé de n'importe quelle revendication précédente, où la phase de résine liquide inclut au moins une résine époxy, facultativement où la composition de résine inclut un durcisseur pour la résine époxy et un catalyseur pour la réaction de la résine époxy et du durcisseur.

6. Le procédé de n'importe quelle revendication précédente, où l'étape de durcissement inclut une étape consistant à au moins partiellement traiter la composition de résine et/ou une étape consistant à refroidir la composition de résine.

7. Le procédé de n'importe quelle revendication précédente, où la phase de résine liquide inclut au moins un polymère thermoplastique fondu.

8. Le procédé de n'importe quelle revendication précédente où les étapes consistant à appliquer la composition de résine sur la masse de fibres et à laisser s'infiltrer la phase de résine liquide de la composition de résine dans la masse de fibres incluent les étapes consistant à disposer la masse de fibres dans un moule (8, 9), à fermer le moule et à injecter la composition de résine dans le moule.

9. Le procédé de n'importe quelle revendication précédente où les étapes consistant à appliquer la composition de résine sur la masse de fibres et à laisser s'infiltrer la phase de résine liquide de la composition de résine dans la masse de fibres incluent les étapes consistant à former un film de la composition de résine et à appliquer le film sur la masse de fibres par le fait de comprimer le film de la composition de résine contre la masse de fibres afin de laisser la phase liquide de la composition de résine s'insinuer dans la masse de fibres.

10. Le procédé de n'importe quelle revendication précédente où les étapes consistant à appliquer la composition de résine sur la masse de fibres et à laisser s'infiltrer la phase de résine liquide de la composition de résine dans la masse de fibres incluent les étapes consistant à disposer la masse de fibres dans une cavité ouverte, à distribuer la composition de résine sur le dessus de la masse de fibres dans la cavité ouverte, à fermer la cavité et à appliquer une pression.

11. Le procédé de n'importe quelle revendication précédente où la composition de résine est dépourvue de particules de charge de matériaux thermiquement et chimiquement stables qui ont une dimension la plus petite égale au ou plus grande que le diamètre des fibres.

12. Le procédé de n'importe quelle revendication précédente, où la composition de résine exclut des particules de charge thermiquement et chimiquement stables qui ont une dimension la plus petite plus grande que 20 % du diamètre des fibres.

13. Un composite renforcé par des fibres comprenant une préforme multicouche qui inclut

a) une couche de mat de fibres (2) qui inclut une masse de fibres qui ont des diamètres de fibres individuelles d'au moins 250 nm, et
b) une feuille de nanofibres (6), où la feuille de nanofibres : i) est composée de monofilaments qui ont un diamètre d'au plus 100 nanomètres, un rapport d'aspect d'au moins 3 et qui sont réalisés en un matériau qui ne fond pas ou ne se dégrade pas dans les conditions de solidification de la phase liquide de la résine dans c), ii) a une épaisseur d'au plus 10 mm ; et iii) réside sur une surface principale du mat de fibres, en étant coextensive à une surface principale du composite renforcé par des fibres, les monofilaments de la feuille de nanofibres étant orientés de manière substantiellement parallèle à la surface principale du composite renforcé par des fibres, et
c) une phase de résine solide qui infiltre le mat de fibres et la feuille de nanofibres, fait adhérer le mat de fibres à la feuille de nanofibres et remplit des espaces interstitiels entre les fibres du mat de fibres et entre les monofilaments de la feuille de nanofibres de telle sorte que le composite renforcé par des fibres a un volume de vide d'au plus 2 %.

14. Le composite renforcé par des fibres de la revendication 13 où l'épaisseur de la feuille de nanofibres est d'au plus 100 $\mu$m et/ou les nanofibres ont des diamètres de 5 à 50 nm.

15. Le composite renforcé par des fibres de n'importe lesquelles des revendications 13 à 14 où le mat de fibres inclut des rovings multifilament qui ont de 300 à 30 000 filaments par roving et un diamètre de 25 $\mu$m à 1 mm, et/ou bien où la phase de résine solide inclut une résine époxy traitée.

Fig. 1

Fig. 2

Fig. 3

Fig. 4

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040033347 A
- GB 2408005 A
- WO 2008104822 A
- US 20130273295 A
- WO 2009147633 A
- WO 2008007094 A
- US 20050095415 A
- US 8486321 B
- US 2016067611 W
- WO 2017120025 A1
- US 2013034447 A1
- US 3018262 A
- US 5137990 A
- US 6451898 B
- US 7163973 B
- US 6887574 B
- US 6632893 B
- US 6242083 B
- US 7037958 B
- US 6572971 B
- US 6153719 A
- US 5405688 A
- WO 2006052727 A
- US 20060293172 A
- US 20050171237 A

**Non-patent literature cited in the description**

- **PALARDY et al.** Optimization of RTM processing parameters for Class A surface finish. *Composites, Part B: Engineering,* 2008, vol. 39B (7-8), 1280-1286
- Chemistry and Technology of the Epoxy Resins. Chapman Hall, 1993
- Epoxy Resins Chemistry and Technology. Marcel Dekker, 1988